# FASCICULE DE BREVET EUROPEEN

(11) **EP 1 641 882 B1**
(45) Date de publication et mention de la délivrance du brevet: **29.12.2010**
(21) Numéro de dépôt: 04767563.2
(22) Date de dépôt: 02.07.2004
(51) Int. Cl.: C08L 83/04, H01B 1/12

(54) **GELS CONDUCTEURS IONIQUES, LEUR PROCEDE DE PREPARATION ET LEURS UTILISATIONS**
IONENLEITENDE GELE, HERSTELLUNGSVERFAHREN DAFÜR UND VERWENDUNG DAVON
IONIC CONDUCTING GELS, PREPARATION METHOD THEREOF AND USE OF SAME

(30) Priorité: 04.07.2003 FR 0308190
(43) Date de publication de la demande: 05.04.2006
(73) Titulaire: CENTRE NATIONAL DE LA RECHERCHE SCIENTIFIQUE, 75794 Paris Cédex 14 (FR); Université Montpellier II, 34095 Montpellier Cedex 05 (FR); Université Blaise Pascal Clermont II, 63000 Clermont Ferrand (FR)
(72) Inventeur: VIOUX, André, 34980 MONTFERRIER SUR LEZE (FR); LE BIDEAU, Jean, 34000 MONTPELLIER (FR); NEOUZE, Marie-Alexandra, F-63400 Chamalières (FR); LEROUX, Fabrice, F-63400 Chamalières (FR)
(74) Mandataire: Grosset-Fournier, Chantal Catherine
(86) Numéro de dépôt international: PCT/FR2004/001723
(87) Numéro de publication internationale: WO 2005/007746

(56) Documents cités:
- SHENG DAI, Y. H. JU, H. J. GAO, J. S. LIN, S. J. PENNYCOOK, C. E. BARNES: "Preparation of silica aerogel using ionic liquids as solvents" CHEM. COMMUN., vol. 3, 2000, pages 243-244, XP002274531 cité dans la demande
- HÉLÈNE OLIVIER-BOURBIGOU AND LIONEL MAGNA: "Ionic liquids: perspectives for organic and catalytic reactions" JOURNAL OF MOLECULAR CATALYSIS A: CHEMICAL, 2002, pages 419-437, XP002274532 cité dans la demande

## Description

La présente invention a pour objet des gels conducteurs ioniques ou ionogels, leur procédé de préparation ainsi que les utilisations desdits ionogels.

Le procédé sol-gel est bien connu de l'art antérieur, simple à mettre en oeuvre, se déroule dans des conditions douces et facilite la mise en forme des matériaux (Brinker et Scherer, 1990). Classiquement le procédé sol-gel consiste en un processus d'hydrolyse et condensation qui à partir d'un précurseur moléculaire (solution vraie) conduit à la formation d'une solution colloïdale (ou sol) puis, par connexion des particules colloïdales, à la formation d'un squelette solide continu nommé gel. Le procédé sol-gel non hydrolytique est un cas particulier de procédé sol-gel, se déroulant en absence d'eau (Vioux, 1997). Un autre cas particulier notable consiste en un procédé sol-gel d'obtention de gels de silice par utilisation de l'acide formique (formation d'eau *in situ*)(Sharp, 1994 ; Dai, 2000).

Les liquides ioniques sont formés par l'association de cations et d'anions et sont à l'état liquide à température proche de la température ambiante. Ils présentent des propriétés remarquables telles qu'une volatilité nulle, une conductibilité ionique élevée ainsi que des propriétés catalytiques. Ils sont utilisés actuellement dans de nombreux domaines, notamment en tant qu'électrolytes (Bonhôte et al., 1996 ; Olivier-Bourbigou et al., 2000 ; Branco et al., 2002 ; Doyle et al., 2000 ; Noda et al., 2000 ; Sun et al., 2001).

L'invention a pour but de fournir un solide monolithique dans lequel est confiné un liquide ionique afin d'associer les propriétés physico-chimiques d'un solide minéral ou organominéral avec celles d'un liquide ionique.

L'invention a également pour but de fournir un tel solide par voie sol-gel, ledit solide ainsi obtenu étant stable en température jusqu'à 300-350°C, transparent et conducteur ionique.

La présente invention a également pour but de fournir des conducteurs ioniques solides, faciles à mettre en forme, stables et performants jusqu'à des températures au moins de l'ordre de 250°C.

L'invention a pour but de fournir un gel conducteur ionique ou ionogel dont la synthèse s'effectue en une seule étape qui consiste à mélanger en phase homogène une solution, en milieu liquide ionique, d'un ou plusieurs précurseurs sol-gel (alkoxysilane, alkylalkoxysilane, arylalkoxysilane, halogénosilane, halogénoalkoxysilane, alkoxyde métallique, akylalkoxyde métallique ou arylalkoxyde métallique, halogénure métallique, etc...), seuls, ou en présence d'eau d'une solution aqueuse (acide, basique, saline, etc.), d'un acide carboxylique, ou d'un autre donneur d'oxygène (alcool, éther, etc...).

La présente invention concerne un procédé de préparation d'un gel conducteur ionique sous forme solide, encore désigné "ionogel", **caractérisé en ce qu**'il comprend une étape de mélange d'un liquide ionique avec au moins un précurseur moléculaire comportant au moins un groupement hydrolysable, et le cas échéant en présence d'un acide, tel qu'un acide carboxylique, le mélange étant ensuite laissé au repos pendant un ou plusieurs jours jusqu'à obtention d'un gel formé par polycondensation du ou des précurseur(s) moléculaire(s), contenant en son sein le liquide ionique susmentionné, et susceptible d'être mis en forme, notamment sous forme de solide monolithique transparent.

Le procédé susmentionné est **caractérisé en ce qu**'il comprend une étape unique de mélange.

L'expression "gel conducteur ionique" désigne un squelette solide continu présentant la propriété de conduction ionique.

L'expression "ionogel" désigne un squelette solide continu renfermant un liquide ionique.

L'expression "liquide ionique" désigne l'association de cations et d'anions à l'état liquide à des températures proches de la température ambiante.

L'expression "précurseur moléculaire" désigne le réactif contenant l'élément ou un des éléments de base dont sera formé le gel ; le précurseur présente le ou les éléments précédents entourés de ligands (appendices ne contenant pas le ou les éléments de base). Il est également appelé "précurseur sol-gel".

L'expression "groupement hydrolysable" désigne un groupement chimique lié à une entité moléculaire et pouvant être séparée de celle-ci par une hydrolyse.

L'expression "solide monolithique" désigne un composé à l'état solide dont au moins une de ses dimensions est au moins de l'ordre du millimètre.

Selon un mode de réalisation avantageux de la présente invention, l'acide carboxylique utilisé est notamment l'acide formique ou l'acide acétique.

Un procédé avantageux de la présente invention est **caractérisé en ce que** le liquide ionique est choisi parmi ceux comprenant à titre de cation un noyau imidazolium ou pyridinium, le cas échéant substitué, notamment par un ou plusieurs groupes alkyles de 1 à 4 atomes de carbone.

Selon un mode de réalisation avantageux de la présente invention, le procédé est **caractérisé en ce que** le cation dudit liquide ionique est un noyau imidazolium de formule (I) suivante : 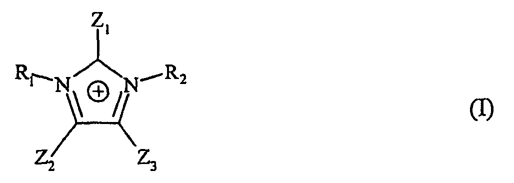 dans laquelle :
- R₁ et R₂ représentent un groupe alkyle de 1 à 4 atomes de carbone, et
- Z₁, Z₂ et Z₃ représentent un atome d'hydrogène ou un groupe alkyle de 1 à 4 atomes de carbone.

La présente invention concerne également un procédé tel que défini ci-dessus, **caractérisé en ce que** le cation est :
- le 1-butyl-3-méthylimidazolium de formule suivante : 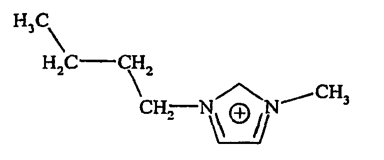
- ou le 1-éthyl-3-métbylimidazolium de formule suivante : 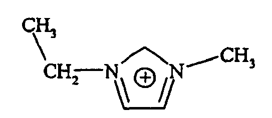
- ou le 1-butyl-2, 3, 4, 5-tétraméthylimidazolium de formule suivante :

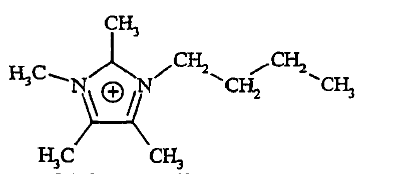

Selon un mode de réalisation avantageux de la présente invention, le procédé est **caractérisé en ce que** le cation est un noyau pyridinium de formule (II) suivante : 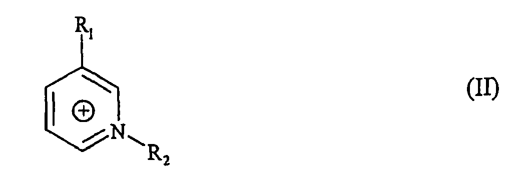 dans laquelle R₁ et R₂ représentent un atome d'hydrogène ou un groupe alkyle de 1 à 4 atomes de carbone.

Selon un mode de réalisation avantageux de la présente invention, le procédé est **caractérisé en ce que** le cation est le 1-butyl-3-méthylpyridinium de formule suivante :

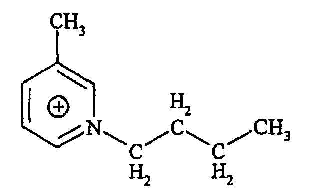

La présente invention concerne également un procédé tel que défini ci-dessus, **caractérisé en ce que** le liquide ionique contient, à titre d'anion, ceux choisis parmi les halogénures et anions perfluorés.

Les anions halogénures sont notamment choisis parmi les anions suivants : chlorure, bromure, fluorure ou iodure.

Les anions perfluorés sont notamment choisis parmi les anions suivants : PF₆⁻, BF₄⁻, SO₃CF₃⁻ ou N(SO₂CF₃)₂⁻.

Selon un mode de réalisation avantageux de la présente invention, l'anion est :
- le bis(trifluorométhylsulfonyl)imide N(SO₂CF₃)₂⁻ de formule développée : 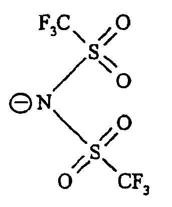
- l'hexafluorophosphate de formule PF₆⁻

La présente invention concerne également un procédé tel que défini ci-dessus, **caractérisé en ce que** le liquide ionique est choisi parmi :
- le 1-butyl-3-méthylimidazolium bis(trifluorométhylsulfonyl)imide,
- le 1-éthyl-3-méthylimidazolium bis(trifluorométhylsulfonyl)imide,
- le 1-butyl-3-méthylimidazolium hexafluorophosphate.

La présente invention concerne également un procédé tel que défini ci-dessus, **caractérisé en ce que** le précurseur moléculaire est choisi parmi les dérivés des éléments des groupes 13, 14 et 15 du tableau périodique, ou les dérivés de métaux de transition.

L'expression "dérivés des éléments des groupes 13, 14 et 15 du tableau périodique" désigne des composés chimiques comprenant un ou des éléments des colonnes du bore (B), du carbone (C) ou de l'azote (N) de la classification des éléments dans le tableau de Mendeleïev. Ce sont par exemple Al(C₂H₅)₃, Al(OCH(CH₃)₂)₃ Si(OCH₃)₄, SnCl₄ ou PCl₅.

L'expression "dérivés de métaux de transition" désigne les composés contenant des métaux de transition (groupes 3 à 12) et divers anions ou ligands. Ce sont par exemple TiCl₄, Ti(OCH(CH₃)₂)₄, Ti(N(CH₃)₂)₄ ou Zn(CH₃)₂.

La présente invention concerne également un procédé tel que défini ci-dessus, **caractérisé en ce que** le précurseur moléculaire est un composé de formule générale

R'ₓ(RO)₄₋ₓSi

dans laquelle :
- x est un nombre entier variant de 0 à 4,
- R représente un groupe alkyle de 1 à 4 atomes de carbone, et
- R' représente :
   * un groupe alkyle comprenant de 1 à 4 atomes de carbone, ou
   * un groupe aryle comprenant de 6 à 30 atomes de carbone, ou
   * un atome d'halogène,
ledit composé étant notamment le tétraméthoxysilane, le méthyltriméthoxysilane, le phényltriéthoxysilane, ou bien **caractérisé en ce que** le précurseur moléculaire est un mélange de composés tels que définis ci-dessus.

Ainsi, le précurseur moléculaire tel qu'utilisé dans le procédé de l'invention est notamment un alkoxysilane lorsque x = 0. Un tel cas correspond par exemple au tétraméthoxysilane répondant à la formule suivante : Si(OCH₃)₄

Le précurseur moléculaire tel qu'utilisé dans le procédé de l'invention peut notamment être un alkylalkoxysilane lorsque x ≠ 0 et R et R' représentent un groupe alkyle. Un tel cas correspond par exemple au méthyltriméthoxysilane (x = 1) répondant à la formule suivante : CH₃Si(OCH₃)₃

De nombreux autres akoxysilanes peuvent être utilisés, tels que (CH₃)₂Si(OCH₃)₂ ou Si(OC₂H₅)₄.

Le précurseur moléculaire tel qu'utilisé dans le procédé de l'invention peut notamment être un arylalkoxysilane lorsque x ≠ 0, R' représente un groupe aryle et R représente un groupe alkyle. Un tel cas correspond par exemple au phényltriéthoxysilane (x = 1) répondant à la formule suivante : C₆H₅Si(OCH₂CH₃)₃

Par ailleurs, le précurseur moléculaire tel qu'utilisé dans le procédé de l'invention peut notamment être un halogénure lorsque x = 4 et R' représente un atome d'halogène. Un tel cas correspond par exemple à SiCl₄.

Selon un mode de réalisation avantageux de la présente invention, le procédé est **caractérisé en ce que** le rapport molaire liquide ionique/précurseur moléculaire dans le mélange est 1/2.

Le choix de ce rapport moléculaire permet d'obtenir un composé présentant de bonnes caractéristiques mécaniques (non friable, manipulable).

Selon un mode de réalisation avantageux de la présente invention, le procédé est **caractérisé en ce que** l'acide carboxylique est de l'acide formique.

L'utilisation de l'acide formique permet d'augmenter la vitesse de condensation.

Selon un mode de réalisation avantageux de la présente invention, le procédé est **caractérisé en ce que** le rapport molaire précurseur moléculaire/acide carboxylique dans le mélange est 1/50.

Le choix de ce rapport moléculaire permet d'augmenter la vitesse de condensation.

Un procédé préféré selon la présente invention est **caractérisé en ce que** le mélange est laissé au repos pendant 7 à 9 jours sous atmosphère et température ambiantes.

Un procédé préféré selon la présente invention est **caractérisé en ce que** le mélange est vieilli sous ultrasons pendant 24 heures.

Ce mode de réalisation préféré permet d'augmenter la vitesse de condensation grâce à une activation par ultrasons.

La présente invention concerne également un procédé tel que défini ci-dessus, **caractérisé en ce que** les ionogels obtenus présentent les caractéristiques suivantes :
- ce sont des solides monolithiques,
- ils sont stables jusqu'à des températures d'environ 350°C,
- ils sont transparents,
- ce sont des conducteurs ioniques, leur conductivité ionique étant notamment comprise entre environ 10⁻⁴ et 10⁻³ S.cm⁻¹ à température ambiante et entre 10⁻² et 10⁻¹ à 230°C.

La présente invention concerne également des ionogels tels qu'obtenus par mise en oeuvre d'un procédé tel que défini ci-dessus, lesdits ionogels comprenant un liquide ionique tel que défini ci-dessus, confiné au sein d'un réseau solide continu formé à partir d'au moins un précurseur moléculaire tel que défini ci-dessus.

L'expression "réseau solide continu" désigne un squelette solide s'étendant dans tout le matériau sans interruption.

L'expression "confiné" désigne que le liquide ionique reste contenu dans le matériau, qu'il n'en coule pas et ne s'en évapore pas.

La présente invention concerne également des ionogels tels que définis ci-dessus, **caractérisés en ce qu**'ils présentent les caractéristiques suivantes :
- ce sont des solides monolithiques,
- ils sont stables jusqu'à des températures d'environ 350°C,
- ils sont transparents,
- ce sont des conducteurs ioniques, leur conductivité ionique étant notamment comprise entre environ 10⁻⁴ et 10⁻³ S.cm⁻¹ à température ambiante et entre 10⁻² et 10⁻¹ à 230°C.

La présente invention concerne également des ionogels tels que définis ci-dessus caractérisés par la présence d'un réseau solide continu inorganique.

Les ionogels préférés de l'invention sont **caractérisés en ce qu**'ils présentent les propriétés mécaniques suivantes :
- un module d'Young compris entre environ 50 et environ 100 MPa, notamment compris entre environ 52 et environ 75 MPa, et de préférence de valeur moyenne égale à environ 63 MPa, et
- une contrainte à la rupture comprise entre environ 0,1 et environ 1,5 MPa, notamment comprise entre environ 0,44 et environ 1,31 MPa, et de préférence de valeur moyenne égale à environ 0,82 MPa.

Le module de Young est le module d'élasticité longitudinale et est égal au rapport de la contrainte sur la déformation.

La contrainte à la rupture correspond à la contrainte appliquée pour la fracture, ou rupture, de l'éprouvette.

La présente invention concerne également les ionogels tels que définis ci-dessus, **caractérisés en ce qu**'ils sont stables en milieu aqueux.

La présente invention concerne également l'utilisation de ionogels tels que définis ci-dessus :
- en tant que matériaux conducteurs, notamment dans le cadre de la préparation d'accumulateurs, de piles à combustible, de cellules photovoltaïques ou de systèmes électrochromes, notamment de dispositifs d'affichage,
- en tant que membranes pour la mise en oeuvre de procédés de séparation de gaz ou de liquides, ou d'électrodialyse,
- en tant que phase stationnaire en analyse chromatographique.

L'invention pourra trouver des applications sur la base de sa transparence comme de sa conductivité ionique. Des applications basées sur sa transparence sont envisageables par exemple par incorporation d'indicateurs colorés, ou bien pour des systèmes électrochromes, par exemple pour l'affichage. Des applications basées sur sa conductivité ionique sont envisageables par exemple dans les batteries et piles, par exemple les piles à combustible qui nécessitent des membranes conducteurs ioniques performantes à des températures de l'ordre de 200°C. Un des avantages de l'invention réside dans le fait que celle-ci permet de disposer de conducteurs ioniques solides, faciles à mettre en forme, stables et performants jusqu'à des températures au moins de l'ordre de 250°C. Il faut noter que les électrolytes polymériques actuellement utilisés dans les piles, batteries et systèmes à échange d'ions sont stables jusqu'à des températures au maximum de l'ordre de 190°C ; en effet, à des températures supérieures, on observe soit une dégradation de la membrane polymérique soit une évaporation de l'électrolyte liquide ; les électrolytes minéraux quant à eux imposent des températures de fonctionnement supérieures à 600°C.

### 1. Synthèse du liquide ionique 1-éthyl-3-méthylimidazolium bis(trifluorosulfonyl)imide (EtMeIm⁺NTf₂⁻)

Dans un ballon tricol de 500 mL muni d'un réfrigérant à boules sont introduits 9,40 g de méthylimidazole (0,115 mol) dans 50 mL d'acétate d'éthyle. 14,25 g de bromure d'éthyle (0,126 mol) sont ajoutés goutte à goutte à température ambiante. Ensuite le mélange est laissé deux heures à reflux avant d'être extrait par trois fois 25 mL d'acétate d'éthyle. Le produit est séché sous vide à 70°C pendant trente minutes ; c'est l'éthylméthylimidazolium bromure. 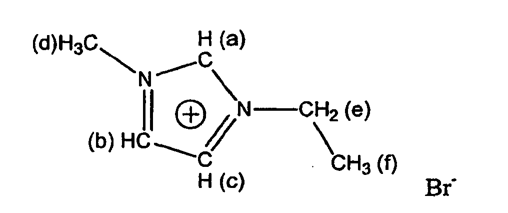 ***RMN ¹H*** : (200 MHz, CD₃CN) : δ 9,42 (t, 1H, Ha) ; 7,63 (d, 1H, Hb) ; 7,55 (d, 1H, Hc) ; 3,93 (s, 3H, Hd) ; 4,28 (q, 2H, He) ; 1,50 (t, 3H, Hf)

Ce produit est ajouté goutte à goutte à température ambiante sur un mélange contenant 50 mL d'eau et 31,37 g de bis(trifluorosulfonyl)imide de lithium (0,109 mol). Ensuite le mélange est agité deux heures à reflux. Le produit est alors extrait avec trois fois 20 mL de dichlorométhane avant d'être évaporé sous vide à 70°C pendant une demi-heure. Le rendement global est de 86%. 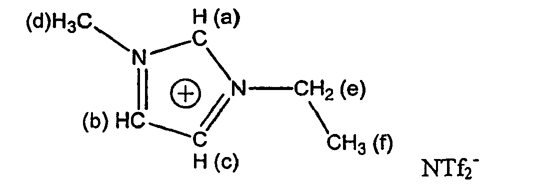 ***RMN ¹H*** : (200 MHz, CD₃CN) : δ 8,46 (s, 1H, Ha) ; 7,42 (s, 1H, Hb) ; 7,37 (s, 1H, Hc) ; 3,93 (s, 3H, Hd) ; 4,28 (q, 2H, He) ; 1,50 (t, 3H, Hf)

### 2. Synthèse du liquide ionique 1-butyl-3-méthylimidazolium bis(trifluorosulfonyl)imide (BuMeIm⁺NTf₂⁻)

Le protocole est le même que pour la synthèse de l'éthylméthylimidazolium bis(trifluorosulfonyl)imide en remplaçant le bromure d'éthyle par le bromure de butyle, les proportions étant respectées. 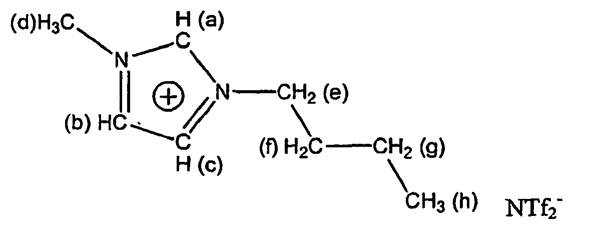 ***RMN ¹H*** : (200 MHz, CD₃CN) : δ 8,41 (s, 1H, Ha) ; 7,42 (s, 1H, Hb) ; 7,37 (s, 1H, Hc) ; 3,85 (s, 3H, Hd) ; 4,18 (q, 2H, He) ; 1,95 (t, 2H, Hf) ; 1,38 (q, 2H, Hg) ; 1,01 (t, 3H, Hh)

### 3. Synthèse du liquide ionique 1-butyl-3-méthylpyridinium bis(trifluorosulfonyl)imide (BuMePy⁺NTf₂⁻)

Le précurseur de ce liquide ionique est la 3-picoline qui est introduite en quantité 1:1,1 par rapport au bromure de butyle. Le protocole expérimental est le même que celui du protocole 1. 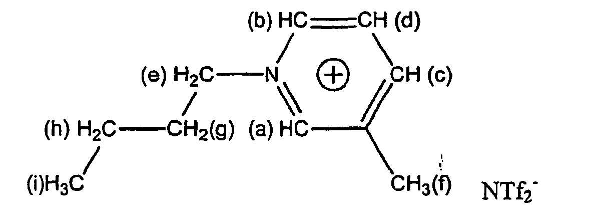 ***RMN ¹H*** : (200 MHz, CD₃CN) : δ 8,58 (s, 1H, Ha) ; 8,52 (d, 1H, Hb) ; 8,34 (d, 1H, Hc) ; 7,94 (t, 1H, Hd) ; 4,50 (t, 2H, He) ; 2,56 (s, 3H, Hf) ; 1,90 (s, 2H, Hg) ; 1,41 (s, 2H, Hh) ; 0,96 (t, 3H, Hi)

### 4. Synthèse du liquide ionique 1-butyl-3-méthylimidazolium bis(trifluorosulfonyl)imide (BuMeIm⁺NTf₂⁻) assistée par ultrasons

Dans un bécher sont introduits 4,89 g de méthylimidazole (0,059 mol) et 8,98 g de bromure de butyle (0,065 mol). Le bécher est placé sous ultrasons, réglés avec une pulsation de 2 secondes, avec une puissance instantanée de 15 W. Le butylméthylimidazolium bromure est obtenu avec 100% de rendement.

Ensuite ce produit est ajouté goutte à goutte à température ambiante sur un mélange contenant 50 mL d'eau et une quantité équimolaire de bis(trifluorosulfonyl)imide de lithium. Ensuite le mélange est maintenu deux heures à reflux. Le produit est alors extrait avec trois fois 20 mL de dichlorométhane avant d'être évaporé sous vide à 70°C pendant une demi-heure. Le rendement global est de 94%.

### 5. Synthèse des pastilles à base de tétraméthoxysilane, contenant le liquide ionique EtMeIm⁺NTf₂⁻

Dans un récipient, notamment un tube en Téflon, sont introduits dans l'ordre : 1 mL d'EtMeIm⁺NTf₂⁻ (3,6 mmol), 2 mL d'acide formique (53 mmol) et 1 mL de tétraméthoxysilane (6,8 mmol). Le système, après homogénéisation, est laissé à gélifier à pression et température ambiante. La gélification se fait au bout d'environ une heure et demie et le vieillissement dure 7 à 9 jours. La pastille obtenue est transparente.

### 6. Synthèse des pastilles à base de tétraméthoxysilane, contenant le liquide ionique BuMeIm⁺NTf₂⁻

Le procédé est le même que dans le protocole 5 en maintenant le rapport molaire ½ entre liquide ionique et tétraméthoxysilane.

### 7. Synthèse des pastilles à base d'un mélange tétraméthoxysilane / méthyltriméthoxysilane, contenant le liquide ionique EtMeIm⁺NTf₂⁻

Dans un bécher sont mélangés x mL de tétraméthoxysilane et y mL de méthyltriméthoxysilane (avec x + y = 2 mL). Typiquement pour une pastille présentant un rapport molaire de 1 pour 1 entre les deux coprécurseurs : x = y = 1 mL. Ensuite dans un récipient, notamment un tube en Téflon, sont introduits dans l'ordre : 1 mL d'EtMeIm⁺NTf₂⁻ (3,6 mmol), 2 mL d'acide formique (53 mmol) et 1 mL de mélange de précurseurs (6,8 mmol d'équivalent Si). Le mélange est agité. Puis le système est laissé à gélifier à pression et température ambiante. La gélification se fait au bout d'environ deux heures et le vieillissement dure 7 à 9 jours. La pastille obtenue est transparente.

### 8. Synthèse des pastilles à base d'un mélange tétraméthoxysilane / méthyltriméthoxysilane, contenant le liquide ionique BuMeIm⁺NTf₂⁻

Le procédé est le même que dans le protocole 7 en maintenant le rapport molaire ½ entre liquide ionique et précurseurs silylés.

### 9. Synthèse des pastilles à base d'un mélange tétraméthoxysilane / phényltriéthoxysilane, contenant le liquide ionique EtMeIm⁺NTf₂⁻

Dans un bécher sont mélangés x mL de tétraméthoxysilane et y mL de phényltriéthoxysilane (avec x + y = 2 mL). Typiquement pour une pastille présentant un rapport molaire de 1 pour 0,6 entre les deux coprécurseurs : x = y = 1 mL. Ensuite le procédé est le même que dans le protocole 7 en maintenant le rapport molaire ½ entre liquide ionique et précurseur silylé.

### 10. Synthèse des pastilles à base d'un mélange tétraméthoxysilane / phényltriéthoxysilane, contenant le liquide ionique BumeIm⁺NTf₂⁻

Le procédé est le même que dans le protocole 9 en maintenant le rapport molaire ½ entre liquide ionique et précurseurs silylés.

### 11. Synthèse des pastilles à base de tétraméthoxysilane, contenant le liquide ionique BuMeIm⁺NTf₂⁻; assistée par ultrasons

Le protocole est le même que dans le protocole 6, mais une fois les produits additionnés. La gélification se fait pendant une heure et demie sous la hotte et ensuite le mélange est placé 24 heures sous ultrasons réglés avec une pulsation de 2 secondes et une puissance instantanée de 15W. La pastille obtenue est transparente.

### 12. Synthèse des éprouvettes pour essais mécaniques de flexion

Préalablement au moulage des éprouvettes, le mélange est fait comme suit : 20 mL de BuMeIm⁺NTf₂⁻, 40 mL d'acide formique et 20 mL de mélange de coprécurseurs, tel que décrit dans les protocoles 7 et 9. Ensuite avec 1,7 mL de ce mélange, des cylindres de 6 mm de diamètre et de 65 mm de hauteur sont remplis. La gélification et le vieillissement ont ensuite lieu pendant deux semaines sous la hotte.

### 13. Mesures de résistance mécanique en flexion sur Ionogels

Les essais sont des expériences de flexion trois points sur les éprouvettes décrites dans le protocole 10. Le rapport diamètre sur longueur des éprouvettes et de 1/10. La vitesse de déplacement du bélier est de 500 µm.min⁻¹. La cellule utilisée pèse 2 kg et l'appareil est de marque Instrom.

### 14. Mesures de conductivité

Les pastilles monolithiques sont utilisées telles quelles. Etude sur échantillons massiques de dimensions moyennes : diamètre 17-20 mm, épaisseur 4-5 mm.

Les pastilles discoïdes ont séjourné 3 semaines dans une atmosphère à 60% d'humidité relative.

Un dépôt d'or est ensuite effectué par déposition sur les deux faces de la pastille, la tranche est protégée par un cache. Condition de dépôt : gaz Argon, pression 6 mbar (≈2.10⁻¹ atm) intensité 40 mA, temps 15' sur chaque face, appareil S150A Sputter coater Edwards.

Les mesures d'impédance complexe sont effectuées à l'aide d'un analyseur de fréquence (Solartron 1174).

Deux dispositifs sont utilisés pour l'étude en température :
- une cellule (à effet Pelletier) permet l'étude sur le domaine -120 à +80°C,
- un four étend la partie haute température de l'ambiante à +300°C.

Des pastilles de platine constituent les contacts.

Dans chaque cas, le domaine de fréquence utilisé est de 10 à 10⁶ Hz.

Un modèle de type RKQ (R et K en parallèle avec Q en série) est utilisé pour simuler les spectres d'impédance.

La conductivité est ensuite exprimée en loi d'Arrhénius.

### 15. Analyses thermogravimétriques / Mesures de stabilité en température

Les analyses se font sur les pastilles mises en poudre. L'appareil utilisé est une thermobalance Netzsch STA 409. Les mesures sont réalisées sous un flux d'air de 50 cm³.min⁻¹, de 22°C à 600°C à raison de 2 °C.min⁻¹.

### 16 Stabilité des pastilles en milieu aqueux

La stabilité des pastilles est testée en introduisant des demi pastilles dans un bécher de 25 mL rempli de 15 mL d'eau distillée et fermé par un film.

### RÉSULTATS

### ESSAIS MÉCANIQUES

1) Cas du ionogel obtenu à partir du précurseur moléculaire tétraméthoxysilane et du liquide ionique 1-butyl-3-méthylimidazolium bis(trifluorométhylsulfonyl)imide

| | |
|---|---|
| Module d'Young | E = 63 ± 7 MPa |
| Contrainte à la rupture | σ = 0,8 ± 0,2 MPa |

Ces valeurs sont de l'ordre de celles communément obtenues pour les aérogels déjà décrits dans la littérature de densité proche de 0,3. Les aérogels décrits dans la littérature sont des gels qui sont séchés dans des conditions hypercritiques. Ces valeurs correspondent donc à des matériaux fragiles, mais non friables et manipulables.
**2) Cas des ionogels obtenus à partir des mélanges de précurseurs silylés A (tétraméthoxysilane / méthyltriméthoxysilane 50/50 mol%) et B (tétraméthoxysilane / phényltriéthoxysilane 62/38 mol%) et du liquide ionique 1-butyl-3-méthylimidazolium bis(trifluorométhylsulfonyl)imide**

| | Mélange A | Mélange B |
|---|---|---|
| Module d'Young E (MPa) | 20 | 10 |
| Contrainte à la rupture σ (MPa) | 0,6 | 0,3 |

### CONDUCTIVITÉS

**1)**

| | |
|---|---|
| Précurseur moléculaire : | tétraméthoxysilane |
| Liquide ionique : | 1-éthyl-3-méthylimidazolium |
| | bis(trifluorométhylsulfonyl)imide |

| conductivité (σ en S.cm⁻¹) | | | | |
|---|---|---|---|---|
| à -20°C | à 0°C | à 50°C | à 150°C | à 200°C |
| 5,4 × 10⁻⁵ | 1,5 × 10⁻⁴ | 1,1 × 10⁻³ | 6,6 × 10⁻³ | 3,8 × 10⁻⁷ |

**2)**

| | |
|---|---|
| Précurseur moléculaire : | tétraméthoxysilane + méthyltriméthoxysilane |
| Liquide ionique : | 1-éthyl-3-méthylimidazolium |
| | bis(trifluorométhylsulfonyl)imide |

| conductivité (σ en S.cm⁻¹) | | | | |
|---|---|---|---|---|
| à -20°C | à 0°C | à 50°C | à 150°C | à 200°C |
| 1,0 × 10⁻⁵ | 4,0 × 10⁻⁵ | 3,0 × 10⁻⁴ | 1,8 × 10⁻² | 3,2 × 10⁻² |

**3)** Stabilité des performances :
Les ionogels ont été soumis à des mesures de conductivité à 200 °C, répétées toutes les 30 minutes pendant 16 heures : aucune dégradation de la conductivité n'a été constatée.

Ces valeurs de conductivité classent les ionogels parmi les meilleurs conducteurs ioniques solides connus à ce jour, et particulièrement les classent comme ceux présentant la meilleure association conductivité ionique / tenue en température.

### STABILITÉ EN MILIEU AQUEUX

### 1) Cas des ionogels à base de tétraméthoxysilane

Au bout de quelques heures le liquide ionique est extrait par l'eau ; il ne reste donc que le squelette inorganique formé par le précurseur moléculaire.

### 2) Cas des ionogels obtenus par un mélange tétraméthoxysilane x / phényltriéthoxysilane y ou tétraméthoxysilane x / méthyltriméthoxysilane y, avec y < 30 mol%

Au bout de deux mois le liquide ionique est déplacé par l'eau ; il ne reste donc que le squelette inorganique formé par le précurseur moléculaire.

### 3) Cas des ionogels obtenus par un mélange tétraméthoxysilane x / phényltriéthoxysilane y ou tétraméthoxysilane x / méthyltriméthoxysilane y, avec y > 30 mol%

La stabilité en milieu aqueux de ces ionogels a été testée pendant cinq mois et on constate que la pastille conserve son intégrité, le liquide ionique étant toujours piégé à l'intérieur des pores de la matrice.

### RÉFÉRENCES

- Branco et al. (2002) Chem. Eur. J., 8(16), 3671-3677,
- Brinker et Scherer (1990) Sol-Gel Science, Academic Press, San Diego,
- Dai et al. (2000) Chem. Commun., 243-244,
- Doyle et al. (2000) Journal of The Electrochentical Society, 147(1), 34-37,
- Noda et al. (2000) Electrochimica Acta, 45, 1265-1270,
- Olivier-Bourbigou et al. (2000) Journal of Molecular Catalysis, A: Chemical, 182-183, 419-437,
- Sharp (1994) Journal of Sol-Gel Science and Technology, 2, 35-41,
- Sun et al. (2001) Electrochimica Acta, 46, 1703-1708,
- Vioux (1997) Chem. Mater., 9, 2292-2299.

## Revendications

1. Utilisation d'un gel conducteur ionique sous forme solide, encore désigné "ionogel", préparé selon un procédé comprenant une étape de mélange d'un liquide ionique avec au moins un précurseur moléculaire comportant au moins un groupement hydrolysable, le cas échéant en présence d'un acide, tel qu'un acide carboxylique, le mélange étant ensuite laissé au repos pendant un ou plusieurs jours jusqu'à obtention d'un gel formé par polycondensation du ou des précurseur(s) moléculaire(s), contenant en son sein le liquide ionique susmentionné, et susceptible d'être mis en forme, notamment sous forme de solide monolithique transparent :
- en tant que matériaux conducteurs, notamment dans le cadre de la préparation d'accumulateurs, de piles à combustible, de cellules photovoltaïques ou de systèmes électrochromes,
- en tant que membranes pour la mise en oeuvre de procédés de séparation de gaz ou de liquides, ou d'électrodialyse,
- en tant que phase stationnaire en analyse chromatographique.

2. Utilisation selon la revendication 1, **caractérisée en ce que** le liquide ionique est choisi parmi ceux comprenant à titre de cation un noyau imidazolium ou pyridinium, le cas échéant substitué, notamment par un ou plusieurs groupes alkyles de 1 à 4 atomes de carbone.

3. Utilisation selon la revendication 2, **caractérisée en ce que** le cation est un noyau imidazolium de formule (I) suivante : 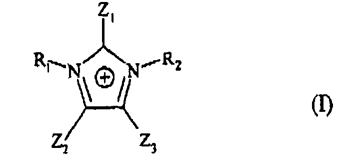 dans laquelle :
- R₁ et R₂ représentent un groupe alkyle de 1 à 4 atomes de carbone, et
- Z₁, Z₂ et Z₃ représentent un atome d'hydrogène ou un groupe alkyle de 1 à 4 atomes de carbone.

4. Utilisation selon la revendication 3, **caractérisée en ce que** le cation est :
- le 1-butyl-3-méthylimidazolium de formule suivante : 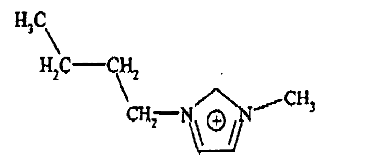
- ou le 1-éthyl-3-méthylimidazolium de formule suivante : 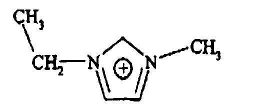
- ou le 1-butyl-2, 3, 4, 5-tétraméthylimidazolium de formule suivante :

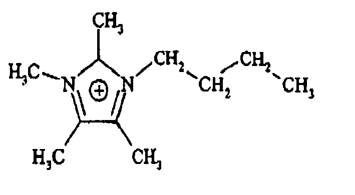

5. Utilisation selon la revendication 2, **caractérisée en ce que** le cation est un noyau pyridinium de formule (II) suivante : 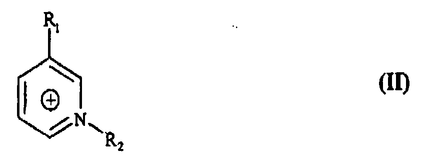 dans laquelle R₁ et R₂ représentent un atome d'hydrogène ou un groupe alkyle de 1 à 4 atomes de carbone.

6. Utilisation selon la revendication 5, **caractérisée en ce que** le cation est :
- le 1 -butyl-3-méthylpyùdinium de formule suivante :

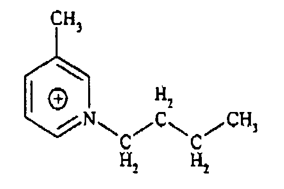

7. Utilisation selon l'une quelconque des revendications 1 à 6, **caractérisée en ce que** le liquide ionique contient, à titre d'anion, ceux choisis parmi les halogénures et anions perfluorés.

8. Utilisation selon l'une quelconque des revendications 1 à 7, **caractérisée en ce que** l'anion est :
- le bis(trifluorométhylsulfonyl)imide de formule : 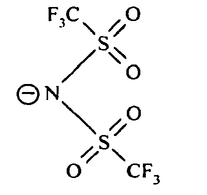
- l'hexafluorophosphate de formule PF₆⁻

9. Utilisation selon l'une quelconque des revendications 1 à 8, **caractérisée en ce que** le liquide ionique est choisi parmi :
- le 1-butyl-3-méthylimidazolium bis(trifluorométhylsulfonyl)imide,
- le 1-éthyl-3-méthylimidazolium bis(trifluorométhylsulfonyl)imide,
- le 1-butyl-3-méthylimidazolium hexafluorophosphate.

10. Utilisation selon l'une des revendications 1 à 9, **caractérisée en ce que** le précurseur moléculaire est choisi parmi les dérivés des éléments des groupes 13, 14 et 15 du tableau périodique, ou les dérivés de métaux de transition.

11. Utilisation selon l'une quelconque des revendications 1 à 10, **caractérisée en ce que** le précurseur moléculaire est un composé de formule générale : R'ₓ(RO)₄₋ₓSi
dans laquelle :
- x est un nombre entier variant de 0 à 4,
- R représente un groupe alkyle de 1 à 4 atomes de carbone, et
- R' représente :
* un groupe alkyle comprenant de 1 à 4 atomes de carbone, ou
* un groupe aryle comprenant de 6 à 30 atomes de carbone, ou
* un atome d'halogène,
ledit composé étant notamment le tétraméthoxysilane, le méthyltriméthoxysilane, le phényltriéthoxysilane, ou bien **caractérisé en ce que** le précurseur moléculaire est un mélange de'composés tels que définis ci-dessus.

12. Utilisation selon l'une quelconque des revendications 1 à 11, **caractérisée en ce que** le rapport molaire liquide ionique/précurseur moléculaire dans le mélange est 1/2.

13. Utilisation selon l'une quelconque es revendications 1 à 12, **caractérisée en ce que** l'acide carboxylique est de l'acide formique.

14. Utilisation selon l'une quelconque des revendications 1 à 13, **caractérisée en ce que** le rapport molaire précurseur moléculaire/acide carboxylique dans le mélange est de 1/50.

15. Utilisation selon l'une des revendications 1 à 14, **caractérisée en ce que** le mélange est laissé au repos pendant 7 à 9 jours sous atmosphère et température ambiantes.

16. Utilisation selon l'une des revendications 1 à 15, **caractérisée en ce que** le mélange est vieilli sous ultra-sons pendant 24 heures.

17. Utilisation selon l'une des revendications 1 à 16, **caractérisée en ce que** les ionogels obtenus présentent les caractéristiques suivantes :
- ce sont des solides monolithiques,
- ils sont stables jusqu'à des températures de 350°C,
- ils sont transparents,
- ce sont des conducteurs ioniques, leur conductivité ionique étant notamment comprise entre 10⁻⁴ et 10⁻³ S.cm⁻¹ à température ambiante et entre 10⁻² et 10⁻¹ à 230°C.

18. Ionogels **caractérisés en ce qu'**ils présentent les caractéristiques suivantes :
- ce sont des solides monolithiques,
- ils sont stables jusqu'à des températures de 350°C,
- ils sont transparents,
- ce sont des conducteurs ioniques, leur conductivité ionique étant notamment comprise entre 10⁻⁴ et 10⁻³ S.cm⁻¹ à température ambiante et entre 10⁻² et 10⁻¹ à 230°C.

19. Ionogels selon la revendication 18, **caractérisés par** la présence d'un réseau solide continu.

20. Ionogels selon l'une quelconque des revendications 18 et 19, **caractérisés en ce qu'**ils présentent les propriétés mécaniques suivantes :
- un module d'Young compris entre 50 et 100 MPa, notamment compris entre 52 et 75 MPa, et de préférence de valeur moyenne égale à 63 MPa, et
- une contrainte à la rupture comprise entre 0,1 et 1,5 MPa, notamment comprise entre 0,44 et 1,31 MPa, et de préférence de valeur moyenne égale à 0,82 MPa.

21. Ionogels selon l'une quelconque des revendications 18 à 20, **caractérisés en ce qu'**ils sont stables en milieu aqueux.

## Claims

1. Use of a solid ionic conductive gel, still identified as "ionogel", prepared according to a process comprising one mix step of a ionic liquid with at least one molecular precursor including at least one hydrolysable group, if appropriate in the presence of an acid, such as a carboxylic acid, the mixture then being left to rest for one or more days until obtaining a gel formed by polycondensation of the molecular precursor(s), containing within it the ionic liquid above-mentioned, and capable of being shaped, in particular in the form of transparent monolithic solid:
- as conducting materials, especially in the preparation of accumulators, fuel cells, photovoltaic cells or electrochrome systems.
- as membrane for the implementation of separation processes for gas or liquids or for electrodialysis
- as stationary phase in chromatographic analysis

2. Use according to claim 1, **characterized in that** the ionic liquid is selected from those comprising as cation an imidazolium or pyridinium nucleus, if appropriate substituted, in particular by one or more alkyl groups with 1 to 4 carbon atoms.

3. Use according to claim 2, **characterized in that** the cation is an imidazolium nucleus of the following formula (I): 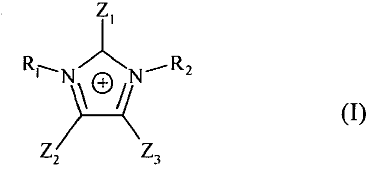 in which:
- R₁ and R₂ represent an alkyl group with 1 to 4 carbon atoms, and
- Z₁, Z₂ and Z₃ represent a hydrogen atom or an alkyl group with 1 to 4 carbon atoms.

4. Use according to claim 3, **characterized in that** the cation is:
- 1-butyl-3-methylimidazolium of the following formula: 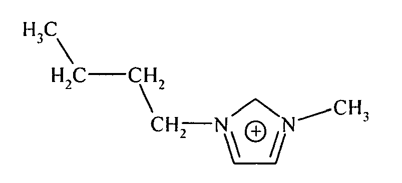
- or 1-ethyl-3-methylimidazolium of the following formula: 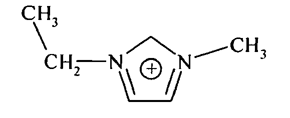
- or 1-butyl-2, 3, 4, 5-tetramethylimidazolium of the following formula:

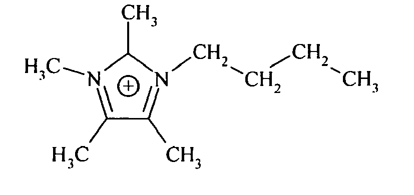

5. Use according to claim 2, **characterized in that** the cation is a pyridinium nucleus of the following formula (II): 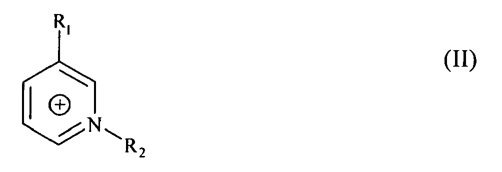 in which R1 and R2 represent a hydrogen atom or an alkyl group with 1 to 4 carbon atoms.

6. Use according to claim 5, **characterized in that** the cation is:
- 1-butyl-3-methylpyridinium of the following formula:

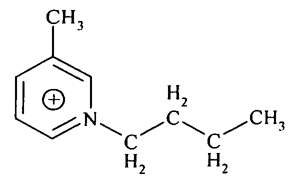

7. Use according to any of claims 1 to 6, **characterized in that** the ionic liquid contains, as anions, those chosen from the halides and perfluorinated anions.

8. Use according to any of claims 1 to 7, **characterized in that** the anion is:
- bis(trifluoromethylsulphonyl)imide of formula: 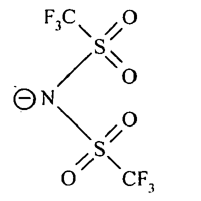
- hexafluorophosphate of formula PF₆⁻.

9. Use according of any of claims 1 to 8, **characterized in that** the ionic liquid is chosen from:
- 1-butyl-3-methylimidazolium bis(trifluoromethylsulphonyl)imide,
- 1-ethyl-3-methylimidazolium bis(trifluoromethylsulphonyl)imide,
- 1-butyl-3-methylimidazolium hexafluorophosphate.

10. Use according to any of claims 1 to 9, **characterised in that** the molecular precursor is selected among the derivates of elements of groups 13, 14 and 15 of the periodic table, or the derivates of transition metals.

11. Use according to one of claims 1 to 10, **characterized in that** the precursor is the compound of general formula: R'ₓ(RO)₄₋ₓSi in which:
- x is an integer varying from 0 to 4,
- R represents an alkyl group with 1 to 4 carbon atoms, and
- R' represents:
* an alkyl group comprising from 1 to 4 carbon atoms, or
* an aryl group comprising from 6 to 30 carbon atoms, or
* a halogen atom,
said compound being in particular the tetramethoxysilane, the methyltrimethoxysilane, the phenyltriethoxysilane, or **characterized in that** the molecular precursor is a mixture of compounds as defined above.

12. Use according to any of claims 1 to 11, **characterized in that** the ionic liquid/molecular precursor molar ratio in the mixture is 1/2.

13. Use according to any of claims 1 to 12, **characterized in that** the carboxylic acid is formic acid.

14. Use according to any of claims 1 to 13, **characterized in that** the molecular precursor/carboxylic acid molar ratio in the mixture is 1/50.

15. Use according to any of claims 1 to 14, **characterized in that** the mixture is left to stand for 7 to 9 days under ambient atmosphere and temperature.

16. Use according to any of claims 1 to 15, **characterized in that** the mixture is aged under ultrasound for 24 hours.

17. Use according to any of claims 1 to 16, **characterized in that** the ionogels obtained present the following characteristics:
- they are monolithic solids,
- they are stable up to temperatures of 350°C,
- they are transparent,
- they are ionic conductors, their ionic conductivity being in particular comprised between 10⁻⁴ and 10⁻³ S.cm⁻¹ at ambient temperature and between 10⁻² and 10⁻¹ at 230°C.

18. Ionogels **characterized in that** they present the following characteristics:
- they are monolithic solids,
- they are stable up to temperatures of 350°C,
- they are transparent,
- they are ionic conductors, their ionic conductivity being in particular comprised between 10-4 and 10-3 S.cm-1 at ambient temperature and between 10-2 and 10-1 at 230°C.

19. Ionogels according to claim 18, **characterized by** the presence of a continuous solid network.

20. Ionogels according to any of claims 18 to 19, **characterized in that** they have the following mechanical properties:
- a Young's modulus comprised between 50 and 100 MPa, in particular comprised between 52 and 75 MPa, and preferably with an average value equal to 63 MPa, and
- a stress at break comprised between 0.1 and 1.5 MPa, in particular comprised between 0.44 and 1.31 MPa, and preferably with an average value equal to 0.82 MPa.

21. Ionogels according to any of claims 18 to 20, **characterized in that** they are stable in aqueous medium.

## Patentansprüche

1. Verwendung eines ionenleitenden Gels in fester Form, auch als "Ionogel" bezeichnet, das gemäß einem Verfahren hergestellt wurde, das einen Schritt des Mischens einer ionischen Flüssigkeit mit mindestens einem molekularen Vorläufer umfasst, der mindestens eine hydrolysierbare Gruppe umfasst, gegebenenfalls in Gegenwart einer Säure, wie etwa einer Carbonsäure, wobei das Gemisch anschließend einen oder mehrere Tage lang stehen gelassen wird bis zum Erhalt eines Gels, das durch Polykondensation des oder der molekularen Vorläufer gebildet wird, das in seinem Inneren die oben genannte ionische Flüssigkeit enthält, und in Form gebracht werden kann, insbesondere in die Form eines transparenten monolithischen Feststoffs:
- als leitende Materialien, insbesondere im Rahmen der Herstellung von Akkumulatoren, Brennstoffzellen, Photovoltaikzellen oder elektrochromen Systemen,
- als Membranen zur Durchführung von Verfahren zur Trennung von Gasen oder Flüssigkeiten oder zur Elektrodialyse,
- als stationäre Phase in der chromatographischen Analyse.

2. Verwendung nach Anspruch 1, **dadurch gekennzeichnet, dass** die ionische Flüssigkeit aus jenen ausgewählt ist, die als Kation einen Imidazolium- oder Pyridiniumkern umfassen, der gegebenenfalls substituiert ist, insbesondere mit einer oder mehreren Alkylgruppen mit 1 bis 4 Kohlenstoffatomen.

3. Verwendung nach Anspruch 2, **dadurch gekennzeichnet, dass** das Kation ein Imidazoliumkern mit der folgenden Formel (I) ist: 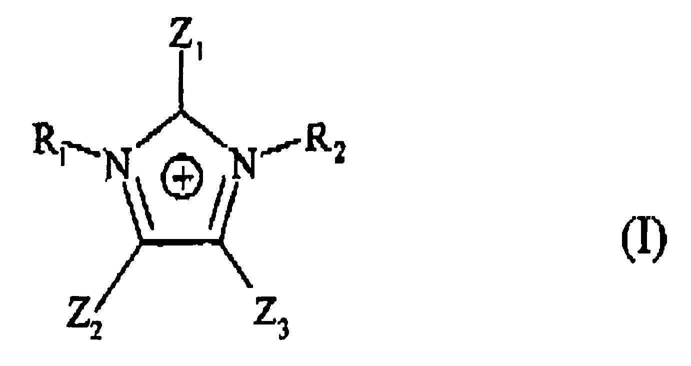 worin:
- R₁ und R₂ für eine Alkylgruppe mit 1 bis 4 Kohlenstoffatomen stehen, und
- Z₁, Z₂ und Z₃ für ein Wasserstoffatom oder eine Alkylgruppe mit 1 bis 4 Kohlenstoffatomen stehen.

4. Verwendung nach Anspruch 3, **dadurch gekennzeichnet, dass** das Kation:
- 1-Butyl-3-methylimidazolium mit der folgenden Formel: 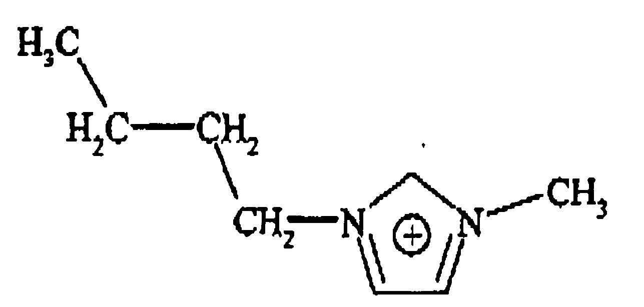
- oder 1-Ethyl-3-methylimidazolium mit der folgenden Formel: 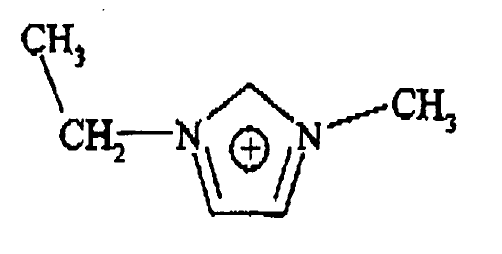
- oder 1-Butyl-2,3,4,5-tetramethylimidazolium mit der folgenden Formel: 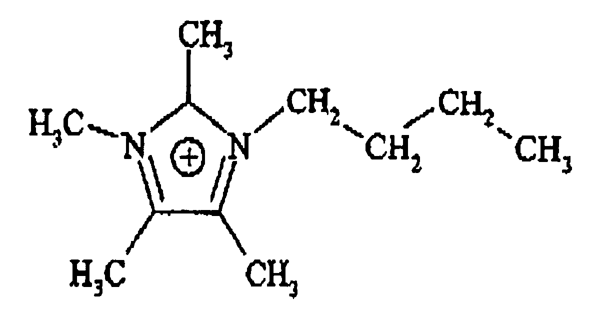
ist.

5. Verwendung nach Anspruch 2, **dadurch gekennzeichnet, dass** das Kation ein Pyridiniumkern mit der folgenden Formel (II) ist: 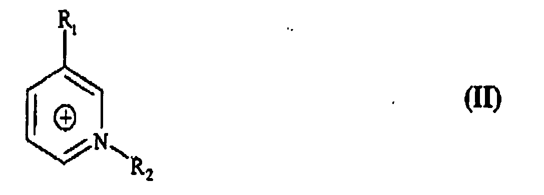 worin R₁ und R₂ für ein Wasserstoffatom oder eine Alkylgruppe mit 1 bis 4 Kohlenstoffatomen stehen.

6. Verwendung nach Anspruch 5, **dadurch gekennzeichnet, dass** das Kation:
- 1-Butyl-3-methylpyridinium mit der folgenden Formel: 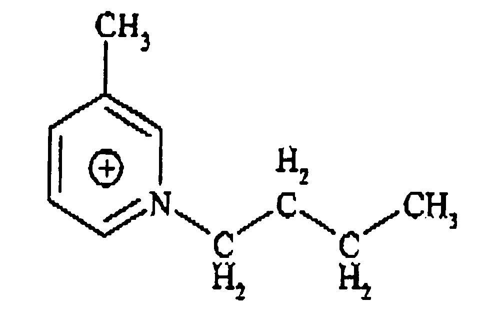
ist.

7. Verwendung nach irgendeinem der Ansprüche 1 bis 6, **dadurch gekennzeichnet, dass** die ionische Flüssigkeit als Anion diejenigen enthält, die aus den Halogeniden und den perfluorierten Anionen ausgewählt sind.

8. Verwendung nach irgendeinem der Ansprüche 1 bis 7, **dadurch gekennzeichnet, dass** das Anion:
- Bis(trifluormethylsulfonyl)imid mit der Formel: 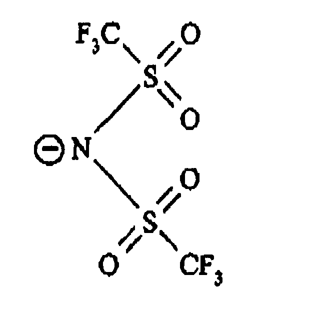
- Hexafluorphosphat mit der Formel PF₆⁻ ist.

9. Verwendung nach irgendeinem der Ansprüche 1 bis 8, **dadurch gekennzeichnet, dass** die ionische Flüssigkeit ausgewählt ist aus:
- 1-Butyl-3-methylimidazoliumbis(trifluormethylsulfonyl)imid,
- 1-Ethyl-3-methylimidazoliumbis(trifluormethylsulfonyl)imid,
- 1-Butyl-3-methylimidazolium-hexafluorphosphat.

10. Verwendung nach einem der Ansprüche 1 bis 9, **dadurch gekennzeichnet, dass** der molekulare Vorläufer aus den Derivaten der Elemente der Gruppen 13, 14 und 15 des Periodensystems der Elemente oder den Derivaten der Übergangsmetalle ausgewählt ist.

11. Verwendung nach irgendeinem der Ansprüche 1 bis 10, **dadurch gekennzeichnet, dass** der molekulare Vorläufer eine Verbindung mit der allgemeinen Formel: R'ₓ(RO)₄₋ₓSi ist, worin:
- x eine ganze Zahl zwischen 0 und 4 ist,
- R für eine Alkylgruppe mit 1 bis 4 Kohlenstoffatomen steht, und
- R' für:
* eine Alkylgruppe, die 1 bis 4 Kohlenstoffatome umfasst, oder
* eine Arylgruppe, die 6 bis 30 Kohlenstoffatome umfasst, oder
* ein Halogenatom steht,
wobei die Verbindung insbesondere Tetramethoxysilan, Methyltrimethoxysilan, Phenyltriethoxysilan ist oder auch **dadurch gekennzeichnet ist, dass** der molekulare Vorläufer ein Gemisch aus den oben definierten Verbindungen ist.

12. Verwendung nach irgendeinem der Ansprüche 1 bis 11, **dadurch gekennzeichnet, dass** das Molverhältnis zwischen ionischer Flüssigkeit und molekularem Vorläufer in dem Gemisch 1/2 beträgt.

13. Verwendung nach irgendeinem der Ansprüche 1 bis 12, **dadurch gekennzeichnet, dass** die Carbonsäure Ameisensäure ist.

14. Verwendung nach irgendeinem der Ansprüche 1 bis 13, **dadurch gekennzeichnet, dass** das Molverhältnis zwischen molekularem Vorläufer und Carbonsäure in dem Gemisch 1/50 beträgt.

15. Verwendung nach einem der Ansprüche 1 bis 14, **dadurch gekennzeichnet, dass** das Gemisch 7 bis 9 Tage lang unter Umgebungsatmosphäre und Umgebungstemperatur stehen gelassen wird.

16. Verwendung nach einem der Ansprüche 1 bis 15, **dadurch gekennzeichnet, dass** das Gemisch unter Ultraschall 24 Stunden lang gealtert wird.

17. Verwendung nach einem der Ansprüche 1 bis 16, **dadurch gekennzeichnet, dass** die erhaltenen Ionogele die folgenden Merkmale aufweisen:
- Es handelt sich um monolithische Feststoffe,
- sie sind stabil bis zu Temperaturen von 350 °C ,
- sie sind transparent,
- es handelt sich um ionische Leiter, deren Ionenleitfähigkeit insbesondere im Bereich zwischen 10⁻⁴ und 10⁻³ S.cm⁻¹ bei Umgebungstemperatur und zwischen 10⁻² und 10⁻¹ bis 230 °C liegt.

18. Ionogele, **dadurch gekennzeichnet, dass** sie die folgenden Merkmale aufweisen:
- Es handelt sich um monolithische Feststoffe,
- sie sind stabil bis zu Temperaturen von 350 °C,
- sie sind transparent,
- es handelt sich ionische Leiter, deren Ionenleitfähigkeit insbesondere im Bereich zwischen 10⁻⁴ und 10⁻³ S.cm⁻¹ bei Umgebungstemperatur und zwischen 10⁻² und 10⁻¹ bis 230 °C liegt.

19. Ionogele nach Anspruch 18, **gekennzeichnet durch** die Gegenwart eines fortlaufenden festen Netzwerks.

20. Ionogele nach irgendeinem der Ansprüche 18 und 19, **dadurch gekennzeichnet, dass** sie die folgenden mechanischen Eigenschaften aufweisen:
- ein Elastizitätsmodul im Bereich zwischen 50 und 100 MPa, insbesondere im Bereich zwischen 52 und 75 MPa und bevorzugt mit einem Mittelwert gleich 63 MPa, und
- eine Bruchspannung im Bereich zwischen 0,1 und 1,5 MPa, insbesondere im Bereich zwischen 0,44 und 1,31 MPa und bevorzugt mit einem Mittelwert gleich 0,82 MPa.

21. Ionogele nach irgendeinem der Ansprüche 18 bis 20, **dadurch gekennzeichnet, dass** sie in wässrigem Medium stabil sind.
